# FASCICULE DE BREVET EUROPEEN

(11) **EP 3 516 795 B1**
(45) Date de publication et mention de la délivrance du brevet: **13.01.2021**
(21) Numéro de dépôt: 17778219.0
(22) Date de dépôt: 19.09.2017
(51) Int. Cl.: G02B 6/36, H04B 10/80

(54) **COLLECTEUR TOURNANT**
GLEITRING
SLIP RING

(30) Priorité: 20.09.2016 FR 1601366
(43) Date de publication de la demande: 31.07.2019
(73) Titulaire: Thales, 92400 Courbevoie (FR)
(72) Inventeur: RICARD, Michel, 06903 Sophia Antipolis (FR); CAPLAIN, Antoine, 06903 Sophia Antipolis (FR); FASSY, Olivier, 06903 Sophia Antipolis (FR)
(74) Mandataire: Marks & Clerk France
(86) Numéro de dépôt international: PCT/EP2017/073680
(87) Numéro de publication internationale: WO 2018/054923

(56) Documents cités:
- EP-A1- 0 045 585
- EP-A1- 0 419 716
- DE-A1- 2 745 770
- DE-A1- 3 409 809
- DE-A1- 4 034 578
- DE-A1-102014 225 097
- JP-A- 2012 119 890
- US-A- 5 553 176

## Description

L'invention se rapporte aux collecteurs tournants pour fibres optiques permettant de transférer des données sans contact d'une première fibre optique à une autre fibre optique pouvant tourner autour d'un axe de rotation par rapport à la première fibre optique.

Elle s'applique notamment, mais pas uniquement, au domaine de la surveillance sous-marine dans lequel un ou plusieurs capteurs, pouvant être compris dans une antenne, sont remorqués par un navire. Des fibres optiques sont classiquement utilisées pour remonter à bord du navire des mesures obtenues par le(s) capteur(s). Les fibres optiques présentent l'avantage de permettre de véhiculer des données sans perte significative avec un débit élevé de l'ordre de plusieurs centaines de mégabits par seconde sur une distance significative pouvant aller jusqu'à plusieurs centaines de mètres.

Une antenne remorquée ou un capteur est classiquement mis à l'eau et récupéré à bord du navire au moyen d'un treuil embarqué à bord du navire. Le treuil comprend une structure fixée au navire et un tambour destiné à tourner autour d'un axe du treuil par rapport à la structure. La remontée des données par fibres optiques nécessite d'équiper le treuil d'un collecteur tournant (« slip-ring » en terminologie anglo-saxonne) pour fibres optiques. Ce collecteur tournant permet de transmettre les données depuis une première fibre optique (fibre rotor) liée au tambour en rotation autour de l'axe du treuil jusqu'à une autre fibre optique (fibre stator) liée à la structure du treuil en rotation autour de l'axe du treuil.

On connait un collecteur tournant sans contact pour fibre optiques. Le collecteur tournant sans contact permet une transmission de données sans contact depuis une partie fixe du collecteur liée à une fibre stator jusqu'à une partie tournante du collecteur liée à une fibre rotor de sorte à permettre la communication de données entre la fibre rotor et la fibre stator. Le collecteur tournant sans contact de l'art antérieur est configuré pour mettre en vis-à-vis la fibre stator et la fibre rotor. La transmission des données sans contact permet d'éviter les problèmes de dégradation de la transmission liée à l'usure mécanique des pièces. Cette solution est simple, peu onéreuse mais limitée à un seul couple de fibres rotor et stator. Elle n'est par exemple pas adaptée pour assurer une transmission des données multifibres, c'est à dire de plusieurs fibres optiques vers plusieurs autres fibres optiques.

On connait également un collecteur tournant comprenant un prisme de Dove interposé entre des fibres optiques rotor et stator permettant une transmission de données multifibres de deux fibres optiques rotor vers deux fibres optiques stator. Toutefois, une perte d'insertion significative est à déplorer sur une des deux voies de transmission optique.

Une autre solution permettant une transmission optique multifibres consiste en un collecteur tournant comprenant, pour chaque couple fibre rotor-fibre stator, un transducteur optique/électrique permettant de convertir un signal véhiculé par une fibre optique rotor en un signal électrique, un collecteur capacitif comprenant une électrode liée à la partie fixe du collecteur tournant et une électrode liée à la partie tournante couplées de manière capacitive pour transmettre les données électriques de la partie fixe à la partie tournante du collecteur, et un convertisseur électrique/optique permettant de convertir les données électriques issues du collecteur capacitif en un signal optique injecté dans la fibre stator. Dans ce cas-là les deux voies de transmission de données présentent des pertes de transmission de données limitées mais les collecteurs de type capacitifs restent onéreux.

Une autre solution moins onéreuse consiste en un collecteur tournant comprenant, pour chaque couple de fibres rotor-fibre stator, un convertisseur optique/électrique permettant de convertir les données véhiculées par une fibre rotor en un signal électrique, des moyens d'émission/réception d'un signal radiofréquence, par exemple du type Wi-Fi, de la partie fixe vers la partie tournante des moyens de réception du signal radiofréquence et un convertisseur électrique/optique permettant de convertir le signal issu des moyens réception du signal radio en un signal optique injecté dans la fibre stator. Toutefois, cette solution présente un débit limité à environ 50 Mbits/s et peut engendrer des perturbations électromagnétiques (CEM) qui sont incompatibles avec les applications militaires. On connait également un collecteur tournant sans contact pour fibres optiques tel que divulgué dans le document US5553176.

Un but de l'invention est de limiter ou palier au moins un des inconvénients précités.

A cet effet, l'invention a pour objet un collecteur tournant comprenant une première partie et une deuxième partie apte à tourner par rapport à la première partie, ledit collecteur tournant comprenant au moins un canal de transmission de données comprenant un convertisseur optique/électrique pour transformer un signal optique véhiculé par une fibre optique en un premier signal électrique, au moins un émetteur optique, recevant le premier signal électrique pour émettre un faisceau lumineux, au moins un détecteur optique permettant de détecter le faisceau lumineux et de le transformer en un deuxième signal électrique, l'émetteur étant compris dans la première partie et le détecteur étant compris dans la deuxième partie ou inversement, et un convertisseur électrique/optique auquel est transmis le deuxième signal électrique de façon que ledit convertisseur électrique/optique génère un autre signal optique destiné à être véhiculé sur une autre fibre optique.

Le collecteur tournant selon l'invention comprend avantageusement au moins une des caractéristiques ci-dessous prises seules ou en combinaison :
- la première partie est apte à tourner par rapport à la deuxième partie autour d'un axe de rotation x, la première partie et la deuxième partie étant distantes l'une de l'autre selon l'axe de rotation x,
- l'émetteur optique est agencé pour émettre un faisceau lumineux dirigé sensiblement parallèlement à l'axe de rotation,
- le collecteur tournant comprend plusieurs canaux de transmission de données.

Avantageusement, les canaux de transmission de données comprennent plusieurs canaux de transmission de données, dits canaux principaux, dans lequel les émetteurs des canaux principaux respectifs sont configurés pour émettre des faisceaux lumineux présentant des pics d'émission respectifs à des longueurs d'ondes d'émission respectives distinctes ou pour émettre des faisceaux lumineux dans des bandes de longueurs d'ondes d'émission respectives disjointes.

Autrement dit, chaque émetteur d'un même canal principal est configuré pour émettre un signal lumineux à une même longueur d'onde ou dans une même bande de fréquences. Par conséquent, si un canal principal comprend plusieurs émetteurs ces émetteurs sont configurés pour émettre un signal lumineux à une même longueur d'onde ou dans une même bande de fréquences. En revanche, les émetteurs des différents canaux principaux sont configurés pour émettre des faisceaux lumineux présentant des pics d'émission à des longueurs d'ondes d'émission distinctes ou pour émettre des faisceaux lumineux dans des bandes de longueurs d'ondes d'émission disjointes.

Avantageusement, les détecteurs optiques des canaux principaux respectifs sont configurés pour délivrer des deuxièmes signaux électriques respectifs issus principalement des rayonnements des émetteurs optiques des canaux principaux respectifs.

Autrement dit, chaque détecteur d'un même canal principal est configuré pour délivrer un signal électrique qui est issu principalement du faisceau ou des faisceaux émis par le ou les émetteur(s) de ce même canal principal. Si un canal principal comprend plusieurs détecteurs optiques ces détecteurs sont configurés pour délivrer un signal électrique qui est issu principalement du faisceau ou des faisceaux émis par le ou les émetteur(s) de ce même canal principal. Les signaux électriques délivrés par les détecteurs des différents canaux principaux sont principalement issus des faisceaux émis par les émetteurs des différents canaux principaux.

Dans un exemple particulier de réalisation, chaque canal principal comprend un unique émetteur optique et un unique détecteur optique.

Le collecteur tournant selon l'invention comprend avantageusement au moins une des caractéristiques ci-dessous prises seules ou en combinaison entre elles ou avec au moins une des caractéristiques précédentes :
- le collecteur tournant comprend au moins un canal principal et un canal redondant associé au canal principal et un sélecteur permettant de sélectionner un canal pris parmi le canal principal et le canal redondant pour assurer la transmission de données de la première partie à la deuxième partie, ou inversement, uniquement au moyen du canal sélectionné,
- le collecteur tournant comprend une pluralité d'émetteurs optiques et une pluralité de détecteurs optiques répartis sur la première partie et la deuxième partie de sorte à permettre la communication de données de façon bidirectionnelle entre la première partie et la deuxième partie,
- le collecteur tournant comprend au moins un canal de transmission de données dans lequel un émetteur optique est agencé de sorte à émettre un faisceau lumineux interceptant une zone photosensible d'au moins un détecteur optique dudit canal de transmission de données quelque soit la position relative entre la première partie et la deuxième partie autour de l'axe de rotation prise parmi les positions relatives possible entre la première partie et la deuxième partie autour de l'axe de rotation,
- le collecteur tournant comprend un unique émetteur optique et un unique détecteur optique, l'émetteur optique étant agencé pour émettre un faisceau lumineux dirigé sensiblement parallèlement à l'axe de rotation et le détecteur optique comprenant une surface photosensible croisant l'axe de rotation,
- la première partie est apte à tourner par rapport à la deuxième partie autour d'un axe de rotation et au moins un canal de transmission de données comprend un émetteur optique agencé de sorte à émettre un faisceau lumineux interceptant une surface photosensible du détecteur dudit canal de transmission de données uniquement pour une sous-partie des positions relatives possibles entre la première partie et la deuxième partie autour de l'axe de rotation,
- le collecteur tournant comprend calculateur configuré pour calculer une vitesse de rotation de la première partie par rapport à la deuxième partie en fonction de l'ouverture du faisceau lumineux émis par l'émetteur du canal, de la position relative de l'émetteur et du détecteur selon l'axe de rotation, de leurs orientations respectives, de la durée d'illumination du détecteur par l'émetteur et de la durée entre deux illuminations successives du détecteur par l'émetteur,
- le collecteur tournant comprend un collecteur tournant de puissance permettant un transfert d'énergie électrique depuis la première partie vers la deuxième partie ou inversement,
- le collecteur tournant de puissance comprend un transformateur comprenant un premier enroulement et un deuxième enroulement couplés magnétiquement et respectivement compris dans la première partie et la deuxième partie, ou inversement, pour permettre le transfert d' énergie de la première partie vers la deuxième partie ou inversement,
- le transformateur comprend un troisième enroulement et un quatrième enroulement couplés magnétiquement et respectivement compris dans la première partie et la deuxième partie, ou inversement, pour permettre le transfert de données de la première partie à la deuxième partie ou inversement,
- le transformateur comprend un circuit magnétique sur lequel sont montés le premier enroulement et le deuxième enroulement, le circuit magnétique comprenant un entrefer dans lequel sont disposés le troisième enroulement et le quatrième enroulement,
- la deuxième partie est mobile relativement à la première partie autour d'un axe de rotation x, le troisième enroulement étant réalisé dans un plan sensiblement perpendiculaire à l'axe de rotation et le quatrième enroulement est réalisé dans un autre plan sensiblement perpendiculaire à l'axe de rotation.

L'invention se rapporte également à un ensemble de mesure comprenant un capteur et un collecteur tournant selon l'invention comprenant au moins un canal de transmission de données, la fibre optique, le signal véhiculé par la fibre optique étant généré à partir d'une mesure issue du capteur, ledit capteur étant alimenté électriquement au moyen d'une énergie électrique délivrée par le transformateur. L'invention se rapporte également à un ensemble comprenant un collecteur tournant pour fibres optiques selon l'invention, ledit ensemble comprenant la fibre optique et l'autre fibre optique. Autrement dit, chaque canal est couplé à une fibre optique de façon à transformer un signal optique provenant de cette fibre optique et à une autre fibre optique de façon à générer le signal optique qui va être véhiculé par cette autre fibre optique. Les fibres optiques couplées aux différents canaux sont distinctes et les autres fibres optiques couplées aux différents canaux sont distinctes.

L'invention se rapporte également à un collecteur tournant comprenant une pluralité de canaux principaux ainsi que les fibres optiques et les autres fibres optiques couplées aux différents canaux principaux.

L'invention sera mieux comprise à l'étude de quelques modes de réalisation décrits à titre d'exemples nullement limitatifs, et illustrés par des dessins annexés sur lesquels :
- la figure 1 représente schématiquement un collecteur tournant selon un premier mode de réalisation de l'invention,
- la figure 2 représente schématiquement un collecteur tournant selon un deuxième mode de réalisation de l'invention,
- la figure 3 représenté schématiquement un collecteur tournant selon un troisième mode de réalisation de l'invention.

D'une figure à l'autre les mêmes éléments sont désignés par les mêmes références numériques.

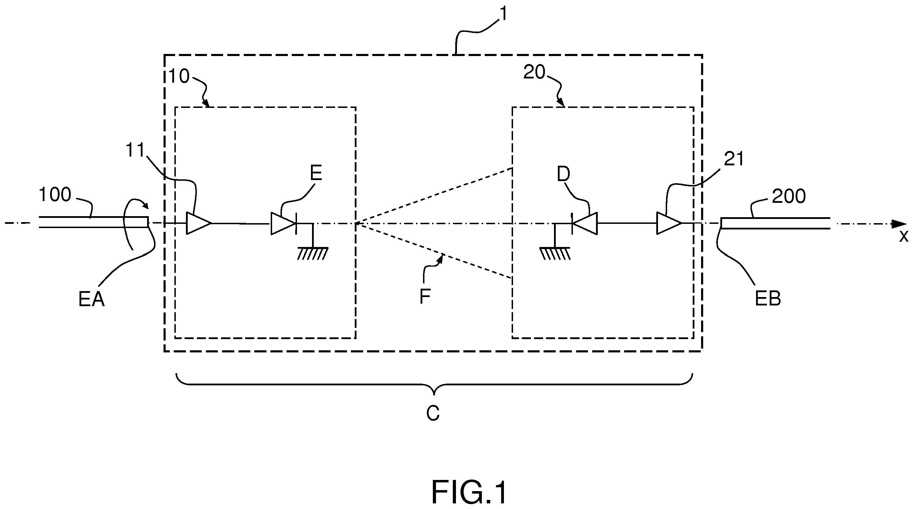

L'invention se rapporte à un collecteur tournant pour fibres optiques. Un premier mode de réalisation de collecteur tournant selon l'invention est représenté schématiquement sur la figure 1. Le collecteur tournant comprend une première partie 10 et une deuxième partie 20 aptes à tourner l'une par rapport à l'autre comme représenté par la flèche sur la figure 1. La première partie 10 peut être une partie fixe et la deuxième partie 20 une partie tournante, ou inversement.

Le collecteur tournant sans contact pour fibres optiques 1 est destiné à coopérer avec des fibres optiques de sorte à recevoir un premier signal optique délivré par une première fibre optique 100 et est destiné à communiquer un deuxième signal optique, généré à partir du premier signal, à une deuxième fibre optique 200. Ceci est réalisé en communiquant des données sans contact de la partie première partie 10 à la deuxième partie 20. La première fibre 100 est destinée à être fixée à la première partie 10 et la deuxième fibre optique 200 est destinée à être fixée à la deuxième partie 20. Avantageusement, les deux parties 10, 20 comprennent des moyens de réception destinés à recevoir une ou plusieurs premières fibres optiques et une ou plusieurs deuxièmes fibres optiques.

De sorte à transférer des données de la première fibre optique 100 à la deuxième fibre optique 200 ou inversement, le collecteur tournant 1 pour fibres optiques selon l'invention comprend un canal de transmission de données C comprenant un convertisseur optique/électrique 11 permettant de transformer un signal optique véhiculé par une des fibres optiques 100, 200 en un premier signal électrique, au moins un émetteur optique E alimenté au moyen du premier signal électrique de sorte à émettre un faisceau optique ou lumineux représentatif du premier signal électrique, au moins un détecteur optique D permettant de détecter le faisceau optique émis par l'émetteur E et de le transformer en un deuxième signal électrique et un convertisseur électrique/optique 21 recevant le deuxième signal électrique et générant, à partir du deuxième signal électrique, un autre signal optique destiné à être véhiculé sur l'autre fibre optique 200 ou 100 respectivement. Dans l'exemple non limitatif de la figure 1, le canal de transmission permet de communiquer des données de la première fibre optique 100 à la deuxième fibre optique 200. La première partie 10 comprend l'émetteur optique E et avantageusement le convertisseur optique/électrique 11. La deuxième partie 20 comprend le détecteur optique D et avantageusement le convertisseur électrique/optique 21. Cela permet de communiquer des données sans contact et de manière optique de la première partie 10 à la deuxième partie 20. Par ailleurs, le convertisseur optique/électrique 11 permet de transformer un signal optique véhiculé par la première fibre optique 100 en le premier signal électrique et le convertisseur électrique/optique 21 permet de générer, à partir du deuxième signal électrique délivré par le détecteur D, l'autre signal optique destiné à être véhiculé sur la deuxième fibre optique 200.

Le collecteur peut comprendre un canal de transmission de données pour communiquer des données de la deuxième fibre optique 200 à la première fibre optique 100. Dans ce cas, la deuxième partie 20 comprend le ou les émetteurs optiques de ce dernier canal et la première partie comprend le ou les détecteurs optiques de ce dernier canal. Avantageusement la première partie 10 comprend le convertisseur électrique/optique 21 et la deuxième partie comprend le convertisseur optique/électrique 11 de ce même canal.

L'émetteur optique E est un émetteur du type optoélectronique. Il s'agit par exemple d'une diode électroluminescente (LED ou Light-Emitting diode en terminologie anglo-saxonne) ou d'une diode laser. Le rayonnement électromagnétique est émis dans une bande de fréquences d'émission prédéterminé ou de préférence une longueur d'onde d'émission prédéterminée. La bande de fréquence d'émission ou la longueur d'onde sont comprises dans une bande de fréquence allant de l'infrarouge à l'ultraviolet en passant par la lumière visible.

Le détecteur optique D est apte à détecter un faisceau lumineux ou optique. Il comprend par exemple une photodiode. Dans le collecteur tournant 1 selon l'invention, les données sont transmises de manière optique sans contact depuis la première partie 10 jusqu'à la deuxième partie 20 (ou inversement) en vue de la transmission de signaux de fibre optique à fibre optique. Le faisceau lumineux émis par l'émetteur optique E est un rayonnement électromagnétique émis dans une bande de fréquence allant de l'infrarouge à l'ultraviolet. Par conséquent, ce rayonnement ne présente pas les inconvénients de la transmission de données par ondes radioélectriques. Le collecteur tournant selon l'invention est simple, peu onéreux, compact. Il permet de la transmission de données à très haut débit supérieur ou égal à 100 Mbits/seconde pouvant même aller jusqu'à 1 Gbits/seconde du fait de l'existence d'émetteurs et de détecteurs optiques pouvant présenter ces débits, par exemples des diodes électroluminescentes et des photodiodes.

Par ailleurs, le collecteur tournant selon l'invention permet une transmission de données multifibres ou multicanaux en prévoyant plusieurs canaux de transmission destinés à être couplés à des premières fibres optiques et deuxièmes fibres optiques respectives distinctes. Cette transmission multifibres ou multicanaux permet de transmettre les mêmes données de façon redondante ou des données distinctes sur plusieurs canaux de façon simple, compacte et peu onéreuse. Cette solution présente un bon rendement énergétique. En particulier, cette solution n'induit pas de pertes inégales selon les canaux. Par ailleurs, cette solution ne génère pas de perturbations magnétiques dans l'environnement.

La solution proposée ne nécessite pas d'imposer une courte distance entre l'émetteur E et le détecteur D. Une distance comparable à celles des télécommandes d'appareils domestiques de l'ordre de quelques mètres est acceptable.

Avantageusement, comme représenté sur la figure 1, la première partie 10, est apte à tourner par rapport à la deuxième partie 20 autour d'un axe de rotation x.

Comme visible sur la figure 1, le collecteur tournant 1 est interposé entre la première fibre 100 et la deuxième fibre 200 selon l'axe de rotation x. Autrement dit, la première partie 10 et la deuxième partie 20 sont interposées entre la première fibre 100 et la deuxième fibre 200 selon l'axe de rotation x. Plus précisément, le collecteur tournant 1 est interposé entre l'extrémité EA de la première fibre 100 destinée à être en regard du collecteur tournant et l'extrémité EB de la deuxième fibre optique 200 destinée à être en regard du collecteur tournant.

Avantageusement, la partie tournante 10 et la partie fixe 20 sont distantes l'une de l'autre selon l'axe de rotation x. Avantageusement, la première partie 10 est disposée d'un côté d'un plan perpendiculaire à l'axe de rotation x et la deuxième partie est disposée de l'autre côté de ce plan. Autrement dit, les deux parties 10 et 20 sont séparées par ce plan perpendiculaire à l'axe x.

Le canal de transmission C représenté sur la figure 1 comprend un émetteur E et un détecteur D. Avantageusement, l'émetteur E et le détecteur D sont agencés de sorte à émettre un faisceau dans une zone d'émission couvrant une zone photosensible, ou « photosensitive zone » en terminologie anglo-saxonne, du détecteur optique D quelque soit la position relative entre la première partie 10 et la deuxième partie 20 autour de l'axe de rotation x prise parmi les positions relatives possibles entre ces deux parties autour de l'axe. Cela permet d'assurer une transmission continue des informations depuis la première partie jusqu'à la deuxième partie.

Sur l'exemple représenté sur la figure 1, l'émetteur optique E est agencé pour émettre un faisceau lumineux F dirigé selon un axe d'émission qui est sensiblement parallèlement à l'axe de rotation x. Avantageusement, le faisceau lumineux F est émis sensiblement selon l'axe de rotation x. Autrement dit, le faisceau lumineux est sensiblement à symétrie de révolution autour de l'axe x. Avantageusement, le détecteur D présente une surface photosensible croisant l'axe de rotation. Ce mode de réalisation est particulièrement avantageux car il permet la transmission de données de façon continue depuis l'émetteur optique E jusqu'au détecteur optique D car le détecteur optique D est illuminé en permanence par l'émetteur optique quelque soit la position relative des deux parties 10 et 20 autour de l'axe de rotation x. Cette transmission continue de données est réalisée de manière simple. Elle ne nécessite pas la mise en œuvre d'un traitement complexe des données transmises.

Avantageusement, le détecteur optique D présente une surface photosensible sensiblement perpendiculaire à l'axe de rotation et sensiblement centrée sur ledit axe de rotation. Cette caractéristique permet de maximiser la surface de réception et donc l'énergie reçue par la photodiode.

Toutefois, il est possible d'obtenir une transmission continue des informations de la première partie 10 à la deuxième partie 20 sans que l'axe d'émission de l'émetteur E ne soit confondu avec l'axe x et sans que la surface photosensible du détecteur D ne soit parfaitement perpendiculaire et centrée sur l'axe x. Il y a une certaine tolérance de positionnement et d'orientation de ces éléments.

En variante, le collecteur tournant comprend au moins un canal de transmission comprenant plusieurs émetteurs et/ou plusieurs détecteurs. Cet agencement permet, lorsque les émetteur(s) et/ou détecteur(s) sont éloignés de l'axe de rotation, de limiter les phénomènes de masquage d'un émetteur par un détecteur lors de la rotation de la première partie 10 du collecteur 1 par rapport à la deuxième partie 20. Cela permet de limiter les risques de discontinuité de la communication de données de la première partie à la deuxième partie.

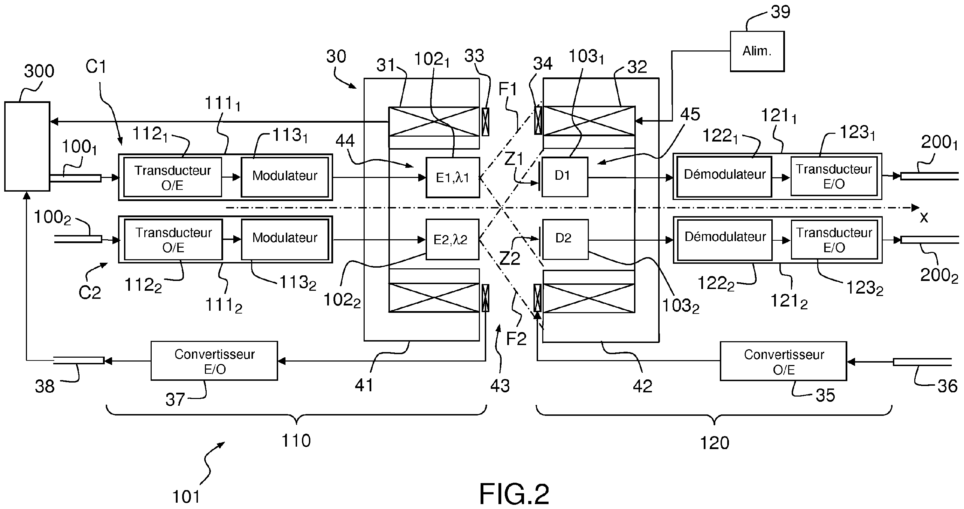

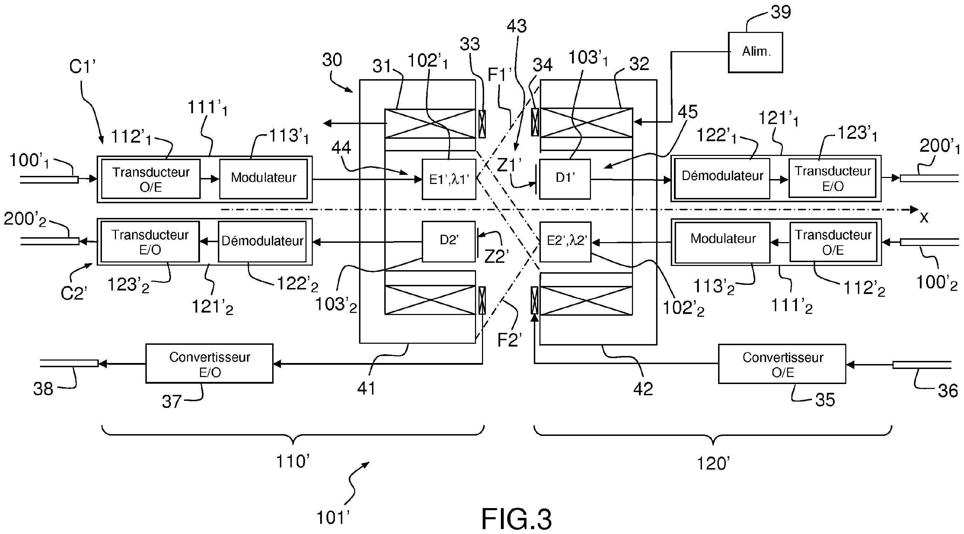

Sur les figures 2 et 3, on a représenté d'autres modes de réalisation de collecteurs tournants pour fibres optiques comprenant plusieurs canaux de transmission de données tels que définis précédemment. Sur les exemples non limitatifs de ces figures, les collecteurs comprennent deux canaux de transmission. Les ensembles représentés sur ces figures comprennent deux premières fibres optiques respectivement couplées à un premier canal de transmission et à un deuxième canal et deux deuxièmes fibres optiques respectivement couplées à un premier canal de transmission et à un deuxième canal de transmission. Chaque canal de transmission comprend au moins un émetteur optique et un détecteur optique.

Sur la réalisation de la figure 2, le collecteur tournant comprend une pluralité d'émetteurs optiques E1, 102₁, E2, 102₂ et une pluralité de détecteurs optiques D1, 103₁, D2, 103₂, compris dans la première partie 110 et la deuxième partie 120 du collecteur tournant 101. Ces émetteurs et récepteurs sont agencés et configurés de sorte que le collecteur tournant 101 pour fibres optiques présente une pluralité de canaux de transmission de données tels que définis précédemment. Sur la réalisation de la figure 2, le collecteur tournant pour fibres optiques comprend, de façon non limitative, deux canaux de transmission de données C1, C2. Chaque canal de transmission de données C1, C2 comprend un des émetteurs E1 ou E2 et un des détecteurs D1 ou D2. En variante, au moins un des canaux de transmission comprend plusieurs émetteurs et/ou plusieurs détecteurs.

Sur la réalisation de la figure 2, tous les émetteurs E1, E2 sont disposés sur la première partie 110 et tous les détecteurs D1, D2 sont disposés sur la deuxième partie 120. Cela signifie que tous les canaux de transmission de données sont destinés à émettre des donnés dans le même sens. Ici les données sont transmises depuis la première partie 110 vers la deuxième partie 120. La transmission des données au moyen des émetteurs et récepteurs se fait de façon unidirectionnelle sur la réalisation de la figure 2.

Chaque canal comprend également un convertisseur optique/électrique 111₁, 111₂ et un convertisseur électrique/optique 121₁, 121₂ tels que définis précédemment destinés à être couplés respectivement à une première fibre optique 100₁, 100₂ et à une deuxième fibre optique 200₁, 200₂. Autrement dit, chaque canal comprend un convertisseur optique/électrique 111₁, 111₂ et un convertisseur électrique/optique 121₁, 121₂ qui lui est propre. Ces convertisseurs ne sont pas communs aux différents canaux. Les convertisseurs des différents canaux sont distincts. Les canauxC1, C2 respectifs sont destinés à être couplés optiquement à des premières fibres optiques 100₁, 100₂ respectives et à des deuxièmes fibres optiques respectives 200₁, 200₂. Autrement dit, les différents canaux sont destinés à être reliés à des premières fibres optiques 100ᵢ différentes et à des deuxièmes fibres optiques 200ᵢ différentes. Le mode de réalisation représenté sur la figure 3 diffère du mode de réalisation représenté sur la figure 2 en ce que le collecteur tournant 101' pour fibres optiques comprend une pluralité d'émetteurs optiques E1' 102'₁, E2', 102'₂ et une pluralité de détecteurs optiques D1', 103'₁, D2', 103'₂ configurés et agencés sur la première partie 110' et la deuxième partie 120' de sorte à permettre la communication de données de façon bidirectionnelle entre la première partie 110' et la deuxième partie 120'. Autrement dit, la transmission des données au moyen des émetteurs et récepteurs se fait de façon bidirectionnelle sur la réalisation de la figure 3. La première partie 110' comprend au moins un desdits émetteurs E1' et un desdits détecteurs D2' et la deuxième partie 120' comprend au moins un desdits émetteurs E2' et un desdits détecteurs D1'. Cet ensemble comprend une pluralité de canaux de transmission dont un premier canal de transmission C1', dit montant, et un deuxième canal de transmission C2', dit descendant, permettant de transmettre des données en sens inverse du premier canal de transmission C1'. En variante, comme précisé précédemment, au moins un des canaux de transmission comprend plusieurs émetteurs et/ou plusieurs détecteurs. Le collecteur peut aussi comprendre un ou plusieurs canaux montants et un ou plusieurs canaux descendants.

Sur la figure 3, chaque canal C1', C2' comprend également un convertisseur optique/électrique 111'₁, 111'₂ et un convertisseur électrique/optique 121'₁, 121'₂ tels que définis précédemment destinés à être couplés respectivement à une première fibre optique 100'₁, 100'₂ et à une deuxième fibre optique 200'₁, 200'₂.

En variante, un même canal peut comprendre plusieurs détecteurs optiques chacun étant relié à un convertisseur électro/optique destiné à être couplé à une fibre qui lui est propre. Les différents détecteurs de ce même canal sont reliés à des convertisseurs électro-optiques différents eux même reliés à des fibres optiques différentes. Cela permet de réaliser une redondance de la détection sans redonder l'émission.

Avantageusement, comme représenté sur les figures 2 et 3, le collecteur selon l'invention comprend plusieurs canaux de transmission de données principaux, dits canaux principaux. Chaque canal principal comprend au moins un émetteur et au moins un récepteur. Les émetteurs E1 et E2 ou E1' et E2' des canaux principaux respectifs C1 et respectivement C2 ou C1' et respectivement C1' d'un même collecteur sont configurés pour émettre des faisceaux lumineux respectifs F1et respectivement F2, ou F1' et respectivement F2' présentant des pics d'émission respectifs, c'est-à-dire des puissances rayonnées relatives maximales respectives, à des longueurs d'ondes d'émission respectives distinctes λ1 et respectivement λ2 ou λ1' et λ2' ou sont, de préférence, configurés pour émettre des faisceaux lumineux respectifs dans des bandes de fréquences respectives disjointes. La puissance rayonnée relative de l'émetteur (ou « Relative Radiant Power » en terminologie anglo-saxonne) à une longueur d'onde donnée est le rapport entre la puissance rayonnée par l'émetteur à cette longueur d'onde et la puissance rayonnée par l'émetteur à une longueur d'onde d'émission référence. Dans l'exemple de la figure 2, cela signifie que λ2 est différent de λ1 et dans l'exemple de la figure 3, cela signifie que λ1' est différent de λ2'. En d'autres termes, une longueur d'onde ou une bande de fréquences est attribuée à chaque canal principal. Cela signifie que si ce canal principal présente plusieurs émetteurs, ces émetteurs vont émettre des faisceaux lumineux dans cette bande de fréquences ou présentant des pics d'émission à cette longueur d'onde et si ce canal présente un seul émetteur, il émet un faisceau lumineux dans cette bande de fréquences ou présentant un pic d'émission à cette longueur d'onde. Les longueurs d'ondes attribuées aux différents canaux sont distinctes ou les bandes de fréquences attribuées aux différents canaux principaux sont disjointes.

La puissance rayonnée relative varie entre 0 et 1 et est, par définition, égale à 1 à la longueur d'onde d'émission référence. Ce mode de réalisation est particulièrement avantageux car il permet de différencier les signaux émis en réception même si l'émetteur d'un canal éclaire les détecteurs de plusieurs canaux principaux. Cette solution limite également les interférences entre les différents canaux de transmission de données. Cela permet de réaliser une émission bidirectionnelle alors même que les récepteurs sont disposés à distance de l'axe de rotation du collecteur tournant ou bien de transmettre simultanément, dans un même sens, des données provenant de différentes fibres optiques. Ce mode de réalisation est simple à mettre en œuvre, il ne nécessite pas de moyens complexes pour discriminer les signaux issus des différents canaux ou pour éviter que l'émetteur d'un canal ne vienne brouiller le détecteur d'un autre canal. Il tolère une redondance sur le canal de transmission et n'exige pas de contrainte sévère de positionnement géométrique pour séparer les faisceaux lumineux.

Dans un exemple où les émetteurs des différents canaux émettent sur des bandes de fréquences respectives disjointes, l'émetteur E1 du premier canal C1 est configuré pour émettre une lumière rouge et l'émetteur E2 du deuxième canal C2 est configuré pour émettre une lumière bleue.

Avantageusement, le détecteur D1 ou D2 (ou D1' ou D2') de chaque canal principal d'un même collecteur est configuré pour délivrer un deuxième signal électrique généré principalement et de préférence uniquement à partir du rayonnement émis par l'émetteur dudit canal principal E1 ou respectivement E2 (ou E1' ou respectivement E2'). Autrement dit, les signaux des différents canaux principaux sont discriminés par leurs longueurs d'ondes respectives. Cela permet de restituer des données véhiculées par la première fibre à la deuxième fibre optique sans traitement complexe. Si un canal principal comprend plusieurs détecteurs, les détecteurs du canal principal sont configurés pour délivrer des signaux respectifs générés principalement et de préférence uniquement à partir du rayonnement émis par l'émetteur ou les émetteurs dudit canal principal.

Avantageusement, le détecteur, ou les détecteurs, de chaque canal principal est (sont) D1 configuré(s) pour délivrer un deuxième signal électrique généré uniquement à partir du rayonnement émis par l'émetteur (ou les émetteurs) du même canal principal ou les émetteurs dudit canal principal. Ceci est par exemple réalisé en transformant uniquement le signal émis par l'émetteur du même canal en un signal électrique. On utilise par exemple dans un même canal, au moins un émetteur émettant un rayonnement optique à une longueur d'onde d'émission prédéterminée et au moins un détecteur comprenant une photodiode munie d'un filtre optique laissant uniquement passer un rayonnement optique sensiblement à ladite longueur d'onde d'émission de l'émetteur du canal considéré. Dans l'exemple précédemment cité, le premier détecteur E1 comprend un filtre optique rouge et le deuxième détecteur un filtre optique bleu.

En variante, le détecteur d'un canal principal comprend un élément photosensible (par exemple une photodiode) présentant une sensibilité spectrale relative maximale sensiblement à la longueur d'onde d'émission de l'émetteur du même canal. La sensibilité spectrale relative d'un détecteur (ou relative spectrale sensitivity en terminologie anglo-saxonne) varie de 0 à 1. La sensibilité spectrale relative d'un détecteur à une longueur d'onde de réception est le rapport entre la sensibilité du détecteur à cette longueur d'onde et la sensibilité du détecteur à une longueur d'onde de réception de référence. La sensibilité spectrale relative du détecteur est égale à 1 à la longueur d'onde de réception de référence.

Avantageusement, la sensibilité spectrale relative d'un détecteur d'un canal principal de transmission de données est supérieure ou égale à 0,8 et de préférence supérieure ou égale à 0,9 à la longueur d'onde d'émission de l'émetteur (ou des émetteurs) du canal correspondant et inférieure ou égale à 0,2 et de préférence inférieure ou égale à 0,1 aux longueurs d'onde d'émission de l'émetteur (ou des émetteurs) de l'autre canal de transmission de données ou des autres canaux principaux de transmission de données.

Avantageusement, la puissance rayonnée relative d'un émetteur d'un canal principal est supérieure ou égale à 0,8 et de préférence supérieure ou égale à 0,9 à la longueur d'onde à laquelle le(s) détecteur(s) du canal présente(nt) une sensibilité spectrale relative maximale et l'émetteur présente une puissance rayonnée relative inférieure ou égale à 0,2 et de préférence inférieure ou égale à 0,1 à la longueur d'onde de sensibilité spectrale relative maximale du ou des détecteurs de chaque autre canal principal.

En variante ou en sus, au moins un canal de transmission de données comprend un filtre électrique recevant le deuxième signal électrique délivré par le détecteur optique. Le deuxième signal généré par le détecteur est alors transmis au convertisseur électrique/optique via le filtre électrique. Le filtre électrique est par exemple un filtre passe-bande. Il permet de filtrer le deuxième signal issu du détecteur, par exemple une photodiode, de façon à délivrer un signal électrique de sortie essentiellement ou de préférence uniquement représentatif du faisceau optique émis par le ou les émetteurs du canal de transmission considéré.

Avantageusement, le premier signal injecté dans l'émetteur d'un canal de transmission est représentatif de données véhiculées par la première fibre optique et le deuxième signal délivré par le convertisseur électrique/optique du même canal est représentatif du premier signal et par conséquent desdites données.

Avantageusement, comme représenté sur les figures 2 et 3, les convertisseurs optique/électrique 111₁, 111₂, 111'₁, 111'₂ sont configurés pour moduler les premiers signaux électriques en intensité. L'intensité de chaque premier signal électrique est alors représentative de données véhiculées par la première fibre optique du canal considéré. A cet effet, comme représenté sur les figures 2 et 3, le convertisseur optique/électrique comprend de manière non limitative un transducteur optique/électrique 112₁, 112₂ et 112'₁, 112'₂ pour transformer le signal optique véhiculé par la première fibre optique associée en un signal numérique et un modulateur 113₁, 113₂ et 113'₁, 113'₂ pour transformer le signal numérique en un signal analogique modulé en intensité (le premier signal électrique).

Le convertisseur électrique/optique 121₁, 121₂, 121'₁, 121'₂ comprend de manière non limitative un démodulateur 122₁, 122₂ et 122'₁, 122'₂ pour transformer le signal analogique délivré par le détecteur optique en un signal numérique démodulé en intensité et un transducteur électrique/optique 123₁, 123₂ et 123'₁, 123'₂ pour transformer le signal démodulé en le deuxième signal optique destiné à être véhiculé par la deuxième fibre optique associé. Le deuxième signal optique est avantageusement représentatif des données véhiculées par la première fibre optique.

Ce qui a été dit précédemment est également valable pour le premier mode de réalisation.

Chacun des convertisseurs peut comprendre un ou plusieurs amplificateurs.

Avantageusement, comme représenté sur la figure 2 au moins un des émetteurs optiques E1, E2 du collecteur tournant, ici les deux, est agencé de sorte à émettre un faisceau lumineux F1, F2, «transmission beam » en terminologie anglo-saxonne, interceptant une surface photosensible Z1, Z2 du détecteur optique D1, D2 du canal comprenant ledit émetteur optique E1, E2 quelque soit la position relative de la première partie 110 et de la deuxième partie 120 autour de l'axe de rotation x, parmi les positions relatives possibles entre la première partie et la deuxième partie autour de l'axe de rotation x, de sorte que le canal permette la transmission continue de données de la première partie 110 vers la deuxième partie 120. Ceci est également valable sur la réalisation de la figure 3, dans laquelle au moins un des émetteurs optiques E1', E2' est agencé de sorte à émettre un faisceau lumineux F1', F2' interceptant une surface photosensible Z1', Z2' du détecteur optique D1', D2' du canal comprenant ledit émetteur optique E1', E2' quelque soit la position relative de la première partie 110' et de la deuxième partie 120' autour de l'axe de rotation x, parmi les positions relatives possibles entre la première partie et la deuxième partie autour de l'axe de rotation x, de sorte que le canal permette la transmission continue de données de la première partie 110' vers la deuxième partie 120'. Cela permet d'assurer une transmission continue de données par le canal de transmission de données. Il n'y a pas de masquage de l'émetteur pendant la rotation de la première partie par rapport à la deuxième partie. Cette transmission continue est obtenue de manière simple et bon marché. Cette solution accepte des tolérances de positionnement des émetteurs et des détecteurs sans que la continuité de la communication des données entre les deux parties du collecteur ne soit affectée. Chaque émetteur E1, E2, E1' E2' ne présente pas forcément un axe d'émission confondu avec l'axe x ni même parallèle à l'axe x. La surface photosensible du détecteur associé D1, D2 ou D1', D2' n'est pas non plus forcément parallèle à l'axe x. L'émetteur et le détecteur d'un même canal peuvent être situés à des distances différentes de l'axe de rotation x. Cela est également valable pour les autres modes de réalisation.

Avantageusement, au moins un émetteur, de préférence tous les émetteurs sont disposés de façon à présenter un axe d'émission sensiblement parallèle à l'axe de rotation x.

Avantageusement, au moins un détecteur optique présente une surface photosensible perpendiculaire à l'axe de rotation x. Cela est avantageusement valable pour tous les détecteurs.

Avantageusement, les émetteurs et les récepteurs sont disposés à la même distance de l'axe de rotation x. Cela permet d'équilibrer les niveaux de transmission entre les différents canaux.

Dans une variante valable pour chacun des modes de réalisation des figures 1 à 3, au moins un canal comprend un émetteur agencé de sorte à émettre un faisceau lumineux interceptant la surface photosensible du détecteur du même canal de transmission uniquement pour une portion différente de 100% des positions relatives possibles entre première partie et la deuxième partie autour de l'axe de rotation x de sorte à former un canal discontinu de transmission de données. Si les différents émetteurs des canaux respectifs sont disposés à une même distance axiale des détecteurs des canaux respectifs, cela peut être obtenu en utilisant un émetteur optique émettant un faisceau lumineux présentant une ouverture plus faible que les autres émetteurs optiques. Au moins instant de réception des données par le détecteur de ce canal peut alors être utilisé pour estimer un paramètre représentatif du mouvement relatif entre les premières parties.

Le collecteur comprend par exemple un calculateur configuré pour calculer une vitesse de rotation de la première partie par rapport à la deuxième partie en fonction de l'ouverture du faisceau lumineux émis par l'émetteur du canal, de la position relative de l'émetteur et du détecteur selon l'axe de rotation, de leurs orientations respectives, de la durée d'illumination du détecteur par l'émetteur et de la durée entre deux illuminations successives du détecteur par l'émetteur.

Le collecteur tournant pour fibres optiques peut comprendre une pluralité de canaux de transmission de données comprenant un canal dit principal et un canal, dit redondant, ledit canal redondant étant associé au canal principal. Il comprend également un sélecteur permettant de sélectionner le canal principal ou le canal redondant pour assurer la transmission de données depuis la première fibre jusqu'à la deuxième fibre uniquement au moyen du canal sélectionné parmi le canal principal et le canal redondant. Ainsi le canal principal et le canal redondant peuvent être réglés sur des longueurs d'ondes identiques sans interférer l'un avec l'autre. Ils peuvent également, c'est-à-dire en variante, être réglés sur des longueurs d'ondes distinctes, tout comme décrit précédemment pour les différents canaux principaux. Dans ce dernier cas, le sélecteur n'est pas nécessaire.

Lorsque le collecteur comprend plusieurs détecteurs disposés sur une même partie 110 ou 120 du collecteur, le collecteur peut comprendre un capteur du type dispositif à transfert de charges ou capteur CCD en référence à l'expression anglo-saxonne charge-coupled device ou du type CMOS en référence à l'expression anglo-saxonne « complementary metal-oxide-semiconductor ». Le capteur CCD ou CMOS peut comprendre plusieurs détecteurs ou tous les détecteurs disposés sur la même partie du collecteur. Ces détecteurs peuvent former le capteur CCD ou CMOS.

Le collecteur tournant peut permettre uniquement le transfert de données de la première partie vers la deuxième partie et/ou inversement sans contact par émetteur(s)/détecteur(s) optiques.

Avantageusement, le collecteur tournant permet un transfert de puissance électrique et/ou de données depuis la première partie vers la deuxième partie et/ou inversement par un autre moyen. Ce transfert peut avantageusement se faire simultanément au transfert de données par l'ensemble d'au moins un émetteur optique et l'ensemble d'au moins un détecteur optique.

Le transfert de puissance et/ou de données supplémentaire peut être réalisé avec contact, par exemple au moyen d'un collecteur tournant présentant un balais assurant le contact électrique entre la première partie 10 et la deuxième partie 20. En variante, le transfert est réalisé sans contact. Cela est par exemple réalisé, de façon non limitative, au moyen d'un transformateur par induction. Un tel collecteur tournant est représenté sur les figures 2 et 3. Ce collecteur tournant 101, 101' comprend un transformateur 30 comprenant un premier enroulement 31 compris dans la première partie 110, 110' et un deuxième enroulement 32 compris dans la deuxième partie 120, 120'. Les deux enroulements 31, 32 sont couplés magnétiquement pour permettre le transfert de puissance électrique de la première partie 110, 110' à la deuxième partie 120, 120' (ou inversement) par induction mutuelle entre les deux enroulements 31, 32. Autrement dit, ces deux enroulements forment le primaire et le secondaire d'un transformateur.

Sur les réalisations non limitatives des figures 2 et 3, les premières et deuxièmes parties 110, 120 et 110', 120' sont écartées l'une de l'autre selon l'axe x.

Les enroulements 31 et 32 présentent des axes d'enroulement sensiblement confondus avec l'axe x.

Le transformateur comprend un circuit magnétique sur lequel sont montés les deux enroulements 31, 32. Le circuit magnétique comprend deux parties 41, 42 et un entrefer 43 séparant les deux parties 41, 42. Les deux enroulements 31, 32 sont séparés par l'entrefer 43 selon l'axe x.

Avantageusement, comme représenté sur les figures 2 et 3, le deuxième enroulement 32 est alimenté électriquement au moyen d'une alimentation 39 qui peut être comprise dans le collecteur tournant ou non. Le deuxième enroulement 32 est alors un premier enroulement primaire du transformateur et le premier enroulement 31 est un premier enroulement secondaire du transformateur. Une puissance électrique est transmise de la deuxième partie 120, 120' à la première partie 110, 110'. Cette transmission d'énergie est réalisée sans contact. En variante, l'alimentation alimente le premier enroulement 31 pour une transmission de puissance électrique de la première partie 110,110' à la deuxième partie 120, 120'.

Avantageusement, dans un mode de réalisation au moins un des convertisseurs optique/électrique et/ou au moins un modulateur est alimenté électriquement au moyen d'une puissance électrique provenant d'une énergie électrique générée au secondaire du transformateur de sorte à établir une communication optique entre la première partie 110 et la deuxième partie 120.

L'invention se rapporte également à un ensemble de mesure comprenant le collecteur tournant selon l'invention et au moins un capteur 300 tel que représenté sur la figure 2, par exemple un hydrophone d'une antenne, relié à la même partie que le premier secondaire du transformateur 31 (ici la première partie 110 du collecteur) de façon à être entrainé par ladite partie en rotation autour de l'axe de rotation x par rapport à l'autre partie du collecteur (ici la deuxième partie 120). Avantageusement, au moins un capteur 300 communique des informations d'une première fibre optique 100₁ à une deuxième fibre optique 200₁ au moyen d'un canal de transmission C1 tel que décrit précédemment.

Au moins un capteur 300 est avantageusement alimenté électriquement au moyen de l'énergie électrique délivrée par le transformateur, par exemple au premier secondaire 31 du transformateur 30.

Sur les réalisations des figures 2 et 3, le collecteur tournant 101, 101' comprend un canal de transmission de données sans fil par induction, c'est à dire par effet transformateur, pour fibres optiques. Ce canal comprend un troisième enroulement 33 du transformateur 30 compris dans la première partie 110, 110' et un quatrième enroulement 34 du transformateur 30 compris dans la deuxième partie 120, 120'. Les deux enroulements 33, 34 sont couplés magnétiquement pour permettre le transfert d'énergie de la première partie 110, 110' à la deuxième partie 120, 120' (ou inversement) par induction mutuelle entre les deux enroulements 33, 34. Ce canal comprend un convertisseur optique/électrique 35 et un convertisseur électrique/optique 37. Sur les réalisations non limitatives des figures 2 et 3, la transmission de données est descendante. Elle permet la transmission de données de la deuxième partie 120 à la première partie 110. Le convertisseur optique/ électrique 35 transforme un signal optique délivré par une première fibre optique supplémentaire 36 en un signal électrique injecté aux bornes du quatrième enroulement 34 et le convertisseur électrique/optique 37 transforme un signal électrique délivré en sortie du troisième enroulement 33 en un signal optique destiné à être injecté dans une deuxième fibre optique supplémentaire 38. Le troisième enroulement joue un rôle de deuxième enroulement secondaire et le quatrième enroulement un rôle de deuxième enroulement primaire du transformateur 30. On pourrait assurer une transmission montante de données. Cela serait par exemple réalisé en intervertissant les positions des deux convertisseurs 35, 37 et en alimentant électriquement le troisième enroulement 33 qui serait alors un deuxième enroulement primaire du transformateur 30. L'enroulement 34 serait alors un deuxième enroulement secondaire du transformateur 30.

Ce type de transmission de données sans fil par induction présente un débit moins élevé que la transmission sans fil du type optique. Il est avantageusement utilisé pour transmettre des données de synchronisation de la première partie à la deuxième partie (ou inversement). Elle permet la transmission de données avec un débit d'un mégabit à plusieurs dizaines de mégabits. Le canal de transmission de données par effet transformateur permet d'éviter l'installation d'un nouveau canal de transmission de données par voie optique pour émettre les données qui sont transmises par ce canal à effet transformateur, par exemple les données de synchronisation.

Les données transmises au moyen du canal de transmission de données par effet transformateur sont avantageusement transmises au capteur 300.

Les deux enroulements primaires 32, 34 du convertisseur sont alimentés au moyen de tensions alternatives présentant des fréquences distinctes.

Avantageusement, comme représenté sur les figures 2 et 3, les troisième et quatrième enroulements 33, 34 sont disposés dans l'entrefer 43 du circuit magnétique 41, 42 du transformateur 30. Cela permet de découpler au moins partiellement les circuits magnétiques des deux couples d'enroulement du transformateur 30 de sorte à faciliter la transmission simultanée de signaux de puissance et de données au moyen du transformateur.

Les deux enroulements 33, 34 sont écartés l'un de l'autre selon l'axe x. Ces enroulements 33, 34 sont avantageusement enroulés autour d'axes d'enroulement respectifs sensiblement confondus avec l'axe de rotation x.

En variante, le collecteur comprend deux transformateurs comprenant les deux premiers enroulements 31, 32 et respectivement les deux autres enroulements 33 et 34. Ces deux transformateurs présentent des circuits magnétiques distincts. Cela permet de découpler les circuits magnétiques associés à ces deux couples d'enroulements.

Avantageusement, le transformateur présente un entrefer au moins égal à 1 mm. La transmission de données par voie optique présente une meilleure performance (bande passante) que la transmission de données par voie magnétique lorsque l'entrefer est important et avec un débit plus importants.

Avantageusement, le troisième enroulement 33 et le quatrième enroulement 34 sont des enroulements planaires réalisés dans un plan sensiblement perpendiculaire à l'axe de rotation x. Cela permet de favoriser leur compacité et ainsi leur positionnement dans l'entrefer 43 tout en limitant la taille de ce dernier. En variante, les enroulements 33, 34 sont des enroulements volumiques.

Sur les réalisations non limitatives des figures 2 et 3, chaque partie 41, 42 du circuit magnétique délimite un canal 44, 45 entourant l'axe de rotation. Ces deux canaux sont séparés par l'entrefer 43. Les émetteurs et les détecteurs sont avantageusement disposés dans ces canaux 44, 45.

L'invention se rapporte également à un ensemble à fibre optique comprenant un collecteur tournant 1 selon l'invention. Comme représenté sur la figure 2, le collecteur tournant 1 comprend au moins un canal de transmission de données C1. L'ensemble à fibre optique comprend également la fibre optique 100₁ qui véhicule le signal optique reçu par le canal de transmission de données C1. L'ensemble à fibre optique peut aussi comprendre l'autre fibre optique 200₁, sur laquelle est injecté l'autre signal optique généré par le canal de transmission de données considéré C1. Sur l'exemple non limitatif de la figure 2, l'ensemble à fibre optique comprend un deuxième canal de transmission C2 ainsi que la fibre optique 100₂ véhiculant le signal optique reçu par ce deuxième canal C2 et éventuellement l'autre fibre optique 200₂ recevant le signal optique délivré par ce canal C2. Les fibres optiques associées aux différents canaux sont différentes.

L'ensemble à fibre optique comprend avantageusement un collecteur tournant de puissance tel que décrit précédemment.

L'invention se rapporte également à un ensemble de mesure comprenant l'ensemble à fibre optique. L'ensemble de mesure comprend un capteur 300 alimenté au moyen de l'énergie délivrée par le transformateur 30 du collecteur tournant de puissance. Le signal optique véhiculé par au moins une fibre optique 100₁ et qui est reçu par un canal de transmission de données C1 est avantageusement généré à partir d'une mesure réalisée par le capteur 300.

Avantageusement, l'ensemble de mesure comprend avantageusement une alimentation 39 alimentant un enroulement primaire du transformateur 30 pris parmi les premier et deuxième enroulements 31, 32.

## Revendications

1. Collecteur tournant pour fibres optiques comprenant une première partie (10 ;110 ;110') et une deuxième partie (20 ; 120 ;120') apte à tourner par rapport à la première partie (10 ;110 ;110'), ledit collecteur tournant comprenant au moins un canal de transmission de données comprenant un convertisseur optique/électrique (11 ; 111₁, 111₂ ; 111'₁, 111'₂) pour transformer un signal optique véhiculé par une fibre optique (100 ; 100₁, 100₂; 100'₁, 100'₂) en un premier signal électrique, au moins un émetteur optique (E, 102₁, 102₂ ; 102'₁, 102'₂), recevant le premier signal électrique pour émettre un faisceau lumineux, au moins un détecteur optique (D, 103₁, 103₂, 103'₁, 103'₂) permettant de détecter le faisceau lumineux et de le transformer en un deuxième signal électrique, l'émetteur étant compris dans la première partie et le détecteur étant compris dans la deuxième partie ou inversement, et un convertisseur électrique/optique (21 ; 121₁, 121₂ ; 121'₁, 121'₂) auquel est transmis le deuxième signal électrique de façon que ledit convertisseur électrique/optique (21 ; 121₁, 121₂ ; 121'₁, 121'₂) génère un autre signal optique destiné à être véhiculé sur une autre fibre optique (200 ; 200₁, 200₂; 200'₁, 200'₂), **caractérisé en ce que** le collecteur tournant pour fibres optiques comprend un collecteur tournant de puissance permettant un transfert d'énergie électrique depuis la première partie (110) vers la deuxième partie (120) ou inversement, le collecteur tournant de puissance comprenant un transformateur (30) comprenant un premier enroulement (31) et un deuxième enroulement (32) couplés magnétiquement et respectivement compris dans la première partie (110) et la deuxième partie (120), ou inversement, pour permettre le transfert d' énergie de la première partie vers la deuxième partie ou inversement, le transformateur (30) comprenant un troisième enroulement (33) et un quatrième enroulement (34) couplés magnétiquement et respectivement compris dans la première partie (110) et la deuxième partie (120), ou inversement, pour permettre le transfert de données de la première partie à la deuxième partie ou inversement.

2. Collecteur tournant pour fibres optiques selon la revendication précédente, dans lequel la première partie (10; 110; 110') est apte à tourner par rapport à la deuxième partie (20 ; 120 ; 120') autour d'un axe de rotation x, la première partie (10 ; 110 ; 110') et la deuxième partie (20 ; 120 ; 120') étant distantes l'une de l'autre selon l'axe de rotation x.

3. Collecteur tournant pour fibres optiques selon l'une quelconque des revendications précédentes, dans lequel l'émetteur optique (E, 102₁, 102₂; 102'₁, 102'₂) est agencé pour émettre un faisceau lumineux dirigé sensiblement parallèlement à l'axe de rotation (x).

4. Collecteur tournant pour fibres optiques selon l'une quelconque des revendications précédentes, dans lequel le collecteur tournant pour fibres optiques comprend plusieurs canaux de transmission de données.

5. Collecteur tournant pour fibres optiques selon la revendication 4, dans lequel le collecteur tournant pour fibres optiques comprend plusieurs canaux de transmission de données (C1, C2; C1', C2'), dits canaux principaux, dans lequel les émetteurs (102₁, 102₂; 102'₁, 102'₂) des canaux principaux (C1, C2; C1', C2') respectifs sont configurés pour émettre des faisceaux lumineux présentant des pics d'émission respectifs à des longueurs d'ondes d'émission respectives distinctes ou pour émettre des faisceaux lumineux dans des bandes de longueurs d'ondes d'émission respectives disjointes.

6. Collecteur tournant pour fibres optiques selon la revendication précédente, dans lequel les détecteurs optiques (103₁, 103₂, 103'₁, 103'₂) des canaux principaux (C1, C2 ; C1', C2') respectifs sont configurés pour délivrer des deuxièmes signaux électriques respectifs issus principalement des rayonnements des émetteurs optiques (102₁, 102₂; 102'₁, 102'₂) des canaux principaux respectifs (C1, C2 ; C1', C2').

7. Collecteur tournant pour fibres optiques selon l'une quelconque des revendications 5 à 6, dans lequel les différents canaux principaux sont destinés à transformer des signaux optiques véhiculés par des fibres optiques distinctes et à générer d'autres signaux optiques véhicules par d'autres fibres optiques distinctes.

8. Collecteur tournant pour fibres optiques selon l'une quelconque des revendications 5 à 7, dans lequel chaque canal principal comprend un unique émetteur optique et un unique détecteur optique.

9. Collecteur tournant pour fibres optiques selon l'une quelconque des revendications 4 à 8, comprenant au moins un canal principal et un canal redondant associé au canal principal et un sélecteur permettant de sélectionner un canal pris parmi le canal principal et le canal redondant pour assurer la transmission de données de la première partie à la deuxième partie, ou inversement, uniquement au moyen du canal sélectionné.

10. Collecteur tournant pour fibres optiques selon l'une quelconque des revendications précédentes, dans lequel le collecteur tournant comprend une pluralité d'émetteurs optiques (102'₁, 102'₂) et une pluralité de détecteurs optiques (103'₁, 103'₂) répartis sur la première partie (110') et la deuxième partie (120') de sorte à permettre la communication de données de façon bidirectionnelle entre la première partie (110') et la deuxième partie (120').

11. Collecteur tournant pour fibres optiques selon l'une quelconque des revendications précédentes, comprenant au moins un canal de transmission de données (C1, C2) dans lequel un émetteur optique (102₁, 102₂) est agencé de sorte à émettre un faisceau lumineux (F1, F2) interceptant une zone photosensible (Z1, Z2) d'au moins un détecteur optique (103₁, 103₂) dudit canal de transmission de données (C1, C2) quelque soit la position relative entre la première partie (110) et la deuxième partie (120) autour de l'axe de rotation (x) prise parmi les positions relatives possible entre la première partie et la deuxième partie autour de l'axe de rotation (x).

12. Collecteur tournant pour fibres optiques selon l'une quelconque des revendications 1 à 3, dans lequel le collecteur tournant pour fibres optiques comprend un unique émetteur optique (E) et un unique détecteur optique (D), l'émetteur optique (E) étant agencé pour émettre un faisceau lumineux dirigé sensiblement parallèlement à l'axe de rotation (x) et le détecteur optique (D) comprenant une surface photosensible croisant l'axe de rotation (x).

13. Collecteur tournant pour fibres optiques selon l'une quelconque des revendications précédentes, dans lequel la première partie est apte à tourner par rapport à la deuxième partie autour d'un axe de rotation (x) et dans lequel au moins un canal de transmission de données comprend un émetteur optique agencé de sorte à émettre un faisceau lumineux interceptant une surface photosensible du détecteur dudit canal de transmission de données uniquement pour une sous-partie des positions relatives possibles entre la première partie et la deuxième partie autour de l'axe de rotation.

14. Collecteur tournant pour fibres optiques selon la revendication précédente, comprenant un calculateur configuré pour calculer une vitesse de rotation de la première partie par rapport à la deuxième partie en fonction de l'ouverture du faisceau lumineux émis par l'émetteur du canal, de la position relative de l'émetteur et du détecteur selon l'axe de rotation, de leurs orientations respectives, de la durée d'illumination du détecteur par l'émetteur et de la durée entre deux illuminations successives du détecteur par l'émetteur.

15. Collecteur tournant pour fibres optiques selon la revendication précédente, dans lequel le transformateur (30) comprend un circuit magnétique (41, 42, 43) sur lequel sont montés le premier enroulement (31) et le deuxième enroulement (32), le circuit magnétique (41, 42) comprenant un entrefer (43) dans lequel sont disposés le troisième enroulement (33) et le quatrième enroulement (34).

16. Collecteur tournant pour fibres optiques selon la revendication précédente, dans lequel la deuxième partie est mobile relativement à la première partie autour d'un axe de rotation x, le troisième enroulement étant réalisé dans un plan sensiblement perpendiculaire à l'axe de rotation et le quatrième enroulement est réalisé dans un autre plan sensiblement perpendiculaire à l'axe de rotation.

17. Ensemble de mesure comprenant un capteur et un collecteur tournant pour fibres optiques selon l'une quelconque des revendications précédentes, comprenant au moins un canal de transmission de données, la fibre optique, le signal véhiculé par la fibre optique étant généré à partir d'une mesure issue du capteur, ledit capteur étant alimenté électriquement au moyen d'une énergie électrique délivrée par le transformateur.

18. Ensemble comprenant un collecteur tournant pour fibres optiques selon l'une quelconque des revendications 1 à 16, ledit ensemble comprenant la fibre optique et l'autre fibre optique.

19. Ensemble comprenant un collecteur tournant pour fibres optiques selon la revendication 7, comprenant les fibres optiques et les autres fibres optiques.

## Patentansprüche

1. Gleitring für Lichtwellenleiter, umfassend einen ersten Abschnitt (10; 110; 110') und einen zweiten Abschnitt (20; 120; 120'), welcher in der Lage ist, sich in Bezug auf den ersten Abschnitt (10; 110; 110') zu drehen, wobei der Gleitring mindestens einen Datenübertragungskanal umfasst, welcher einen optisch/elektrischen Umwandler (11; 111₁, 111₂; 111'₁, 111'₂) zum Umwandeln eines optischen Signals, welches durch einen Lichtwellenleiter (100; 100₁, 100₂; 100'₁, 100'₂) transportiert wird, in ein erstes elektrisches Signal umfasst, mindestens einen optischen Sender (E, 102₁, 102₂; 102'₁, 102'₂), welcher das erste elektrische Signal empfängt, um einen Lichtstrahl auszusenden, mindestens einen optischen Detektor (D, 103₁, 103₂, 103'₁, 103'₂), welcher es ermöglicht, den Lichtstrahl zu erkennen und ihn in ein zweites elektrisches Signal umzuwandeln, wobei der Sender in dem ersten Abschnitt enthalten und der Detektor in dem zweiten Abschnitt enthalten ist oder umgekehrt, und einen elektrisch/optischen Umwandler (21; 121₁, 121₂; 121'₁, 121'₂), an welchen das zweite elektrische Signal übertragen wird, sodass der elektrisch/optische Umwandler (21; 121₁, 121₂; 121'₁, 121'₂) ein anderes optisches Signal erzeugt, welches dazu bestimmt ist, über einen anderen Lichtwellenleiter (200; 200₁, 200₂; 200'₁, 200'₂) transportiert zu werden,
**dadurch gekennzeichnet, dass** der Gleitring für Lichtwellenleiter einen Leistungsgleitring umfasst, welcher eine Übertragung von elektrischer Energie von dem ersten Abschnitt (110) zu dem zweiten Abschnitt (120) oder umgekehrt ermöglicht, wobei der Leistungsgleitring einen Transformator (30) umfasst, welcher eine erste Wicklung (31) und eine zweite Wicklung (32) umfasst, welche magnetisch gekoppelt und jeweils in dem ersten Abschnitt (110) und dem zweiten Abschnitt (120) enthalten sind oder umgekehrt, um eine Übertragung von elektrischer Energie von dem ersten Abschnitt (110) zu dem zweiten Abschnitt (120) oder umgekehrt zu ermöglichen, wobei der Transformator (30) eine dritte Wicklung (33) und eine vierte Wicklung (34) umfasst, welche magnetisch gekoppelt und jeweils in dem ersten Abschnitt (110) und dem zweiten Abschnitt (120) enthalten sind oder umgekehrt, um die Übertragung von Daten vom ersten Abschnitt an den zweiten Abschnitt oder umgekehrt zu ermöglichen.

2. Gleitring für Lichtwellenleiter nach dem vorhergehenden Anspruch, wobei der erste Abschnitt (10; 110; 110') in der Lage ist, sich in Bezug auf den zweiten Abschnitt (20; 120; 120') um eine Drehachse x zu drehen, wobei der erste Abschnitt (10; 110; 110') und der zweite Abschnitt (20; 120; 120') entlang der Drehachse x beabstandet sind.

3. Gleitring für Lichtwellenleiter nach einem der vorhergehenden Ansprüche, wobei der optische Sender (E, 102₁, 102₂; 102'₁, 102'₂) angeordnet ist, um einen Lichtstrahl auszusenden, welcher im Wesentlichen parallel zur Drehachse (x) gerichtet ist.

4. Gleitring für Lichtwellenleiter nach einem der vorhergehenden Ansprüche, wobei der Gleitring für Lichtwellenleiter mehrere Datenübertragungskanäle umfasst.

5. Gleitring für Lichtwellenleiter nach Anspruch 4, wobei der Gleitring für Lichtwellenleiter mehrere Datenübertragungskanäle (C1, C2; C1', C2') umfasst, genannt Hauptkanäle, wobei die Sender (102₁, 102₂; 102'₁, 102'₂) der jeweiligen Hauptkanäle (C1, C2; C1', C2') konfiguriert sind, um Lichtstrahlen auszusenden, welche jeweilige Sendespitzen bei jeweiligen unterschiedlichen Sendewellenlängen aufweisen, oder um Lichtstrahlen in Bändern mit jeweiligen getrennten Sendewellenlängen auszusenden.

6. Gleitring für Lichtwellenleiter nach dem vorhergehenden Anspruch, wobei die optischen Detektoren (103₁, 103₂, 103'₁, 103'₂) der jeweiligen Hauptkanäle (C1, C2; C1', C2') konfiguriert sind, um jeweilige zweite elektrische Signale abzugeben, welche hauptsächlich aus den Strahlungen der optischen Sender (102₁, 102₂; 102'₁, 102'₂) der jeweiligen Hauptkanäle (C1, C2; C1', C2') entstammen.

7. Gleitring für Lichtwellenleiter nach einem der Ansprüche 5 bis 6, wobei die unterschiedlichen Hauptkanäle dazu bestimmt sind, optische Signale, welche durch unterschiedliche Lichtwellenleiter transportiert werden, umzuwandeln und andere optische Signale zu erzeugen, welche durch andere unterschiedliche Lichtwellenleiter transportiert werden.

8. Gleitring für Lichtwellenleiter nach einem der Ansprüche 5 bis 7, wobei jeder Hauptkanal einen einzigen optischen Sender und einen einzigen optischen Detektor umfasst.

9. Gleitring für Lichtwellenleiter nach einem der Ansprüche 4 bis 8, umfassend mindestens einen Hauptkanal und einen redundanten Kanal, welcher dem Hauptkanal zugeordnet ist und einen Wählschalter, welcher es ermöglicht, einen Kanal aus dem Hauptkanal und dem redundanten Kanal zu wählen, um die Übertragung von Daten vom ersten Abschnitt zum zweiten Abschnitt oder umgekehrt ausschließlich mithilfe des ausgewählten Kanals sicherzustellen.

10. Gleitring für Lichtwellenleiter nach einem der vorhergehenden Ansprüche, wobei der Gleitring eine Vielzahl von optischen Sendern (102'₁, 102'₂) und eine Vielzahl von optischen Detektoren (103'₁, 103'₂) umfasst, welche über den ersten Abschnitt (110') und den zweiten Abschnitt (120') in einer Weise verteilt sind, dass sie die Kommunikation von Daten in bidirektionaler Weise zwischen dem ersten Abschnitt (110') und dem zweiten Abschnitt (120') ermöglichen.

11. Gleitring für Lichtwellenleiter nach einem der vorhergehenden Ansprüche, umfassend mindestens einen Datenübertragungskanal (C1, C2), in welchem ein optischer Sender (102₁, 102₂) so angeordnet ist, dass er einen Lichtstrahl (F1, F2) sendet, welcher einen lichtempfindlichen Bereich (Z1, Z2) von mindestens einem optischen Detektor (103₁, 103₂) des Datenübertragungskanals (C1, C2) abfängt, unabhängig von der relativen Position zwischen dem ersten Abschnitt (110) und dem zweiten Abschnitt (120) um die Drehachse (x) aus den möglichen relativen Positionen zwischen dem ersten Abschnitt und dem zweiten Abschnitt um die Drehachse (x).

12. Gleitring für Lichtwellenleiter nach einem der Ansprüche 1 bis 3, wobei der Gleitring für Lichtwellenleiter einen einzigen optischen Sender (E) und einen einzigen optischen Detektor (D) umfasst, wobei der optische Sender (E) angeordnet ist, um einen im Wesentlichen parallel zur Drehachse (x) gerichteten Lichtstrahl auszusenden und der optische Detektor (D) eine lichtempfindliche Oberfläche umfasst, welche die Drehachse (x) kreuzt.

13. Gleitring für Lichtwellenleiter nach einem der vorhergehenden Ansprüche, wobei der erste Abschnitt in der Lage ist, sich in Bezug auf den zweiten Abschnitt um eine Drehachse (x) zu drehen und wobei mindestens ein Datenübertragungskanal einen optischen Sender umfasst, welcher so angeordnet ist, dass er einen Lichtstrahl aussendet, welcher eine lichtempfindliche Oberfläche des Detektors des Datenübertragungskanals nur in Bezug auf einen Unterabschnitt der möglichen relativen Positionen zwischen dem ersten Abschnitt und dem zweiten Abschnitt um die Drehachse abfängt.

14. Gleitring für Lichtwellenleiter nach dem vorhergehenden Anspruch, umfassend einen Rechner, welcher konfiguriert ist, um eine Drehgeschwindigkeit des ersten Abschnitts in Bezug auf den zweiten Abschnitt entsprechend der Öffnung des Lichtstrahls zu berechnen, welcher durch den Sender des Kanals ausgesendet wird, entsprechend der relativen Position des Senders und des Detektors entlang der Drehachse, ihrer jeweiligen Ausrichtungen, der Beleuchtungsdauer des Detektors durch den Sender und der Dauer zwischen zwei aufeinanderfolgenden Beleuchtungen des Detektors durch den Sender.

15. Gleitring für Lichtwellenleiter nach dem vorhergehenden Anspruch, wobei der Transformator (30) einen Magnetkreis (41, 42, 43) umfasst, an welchem die erste Wicklung (31) und die zweite Wicklung (32) montiert sind, wobei der Magnetkreis (41, 42) einen Spalt (43) umfasst, in welchem die dritte Wicklung (33) und die vierte Wicklung (34) angeordnet sind.

16. Gleitring für Lichtwellenleiter nach dem vorhergehenden Anspruch, wobei der zweite Abschnitt in Bezug auf den ersten Abschnitt um eine Drehachse x beweglich ist, wobei die dritte Wicklung in einer Ebene hergestellt ist, welche im Wesentlichen rechtwinklig zur Drehachse ist und die vierte Wicklung in einer anderen Ebene hergestellt ist, welche im Wesentlichen rechtwinklig zur Drehachse ist.

17. Messanordnung, umfassend einen Sensor und einen Gleitring für Lichtwellenleiter nach einem der vorhergehenden Ansprüche, umfassend mindestens einen Datenübertragungskanal, den Lichtwellenleiter, wobei das durch den Lichtwellenleiter transportierte Signal anhand einer aus dem Sensor stammenden Messung erzeugt wird, wobei der Sensor elektrisch mithilfe einer elektrischen Energie versorgt wird, welche durch den Transformator abgegeben wird.

18. Anordnung, umfassend einen Gleitring für Lichtwellenleiter nach einem der Ansprüche 1 bis 16, wobei die Anordnung den Lichtwellenleiter und den anderen Lichtwellenleiter umfasst.

19. Anordnung, umfassend einen Gleitring für Lichtwellenleiter nach Anspruch 7, umfassend die Lichtwellenleiter und die anderen Lichtwellenleiter.

## Claims

1. A slip ring for optical fibres comprising a first part (10; 110; 110') and a second part (20; 120; 120') able to rotate relative to the first part (10; 110; 110'), said slip ring comprising at least one data transmission channel comprising an optical/electrical converter (11; 111₁, 111₂; 111'₁, 111'₂) for converting an optical signal carried by an optical fibre (100; 100₁, 100₂; 100'₁, 100'₂) into a first electrical signal, at least one optical emitter (E, 102₁, 102₂; 102'₁, 102'₂) receiving the first electrical signal in order to emit a light beam, at least one optical detector (D, 103₁, 103₂, 103'₁, 103'₂) allowing the light beam to be detected and converted into a second electrical signal, the emitter being included in the first part and the detector being included in the second part, or vice versa, and an electrical/optical converter (21; 121₁, 121₂, 121'₁, 121'₂), to which the second electrical signal is transmitted so that said electric/optical converter (21; 121₁, 121₂, 121'₁, 121'₂) generates another optical signal intended to be carried over another optical fibre (200; 200₁, 200₂; 200'₁, 200'₂),
**characterised in that** the slip ring for optical fibres comprises a power slip ring allowing electrical energy to be transferred from the first part (110) to the second part (120), or vice versa, the power slip ring comprising a transformer (30) comprising a first winding (31) and a second winding (32) magnetically coupled together and respectively included in the first part (110) and the second part (120), or vice versa, to allow energy to be transferred from the first part to the second part, or vice versa, the transformer (30) comprising a third winding (33) and a fourth winding (34) magnetically coupled together and respectively included in the first part (110) and the second part (120), or vice versa, to allow data to be transferred from the first part to the second part, or vice versa.

2. The slip ring for optical fibres as claimed in the preceding claim, wherein the first part (10; 110; 110') is able to rotate relative to the second part (20; 120; 120') about an axis of rotation (x), the first part (10; 110; 110') and the second part (20; 120; 120') being remote from each other along the axis of rotation (x).

3. The slip ring for optical fibres as claimed in any one of the preceding claims, wherein the optical emitter (E, 102₁, 102₂; 102'₁, 102'₂) is arranged to emit a light beam directed substantially parallel to the axis of rotation (x).

4. The slip ring for optical fibres as claimed in any one of the preceding claims, wherein the slip ring for optical fibres comprises a plurality of data transmission channels.

5. The slip ring for optical fibres as claimed in claim 4, wherein the slip ring for optical fibres comprises a plurality of data transmission channels (C1, C2; C1', C2'), called main channels, wherein the emitters (102₁, 102₂; 102'₁, 102'₂) of the respective main channels (C1, C2; C1', C2') are configured to emit light beams having respective emission spikes at distinct respective emission wavelengths or to emit light beams in bands of respective disjointed emission wavelengths.

6. The slip ring for optical fibres as claimed in the preceding claim, wherein the optical detectors (103₁, 103₂, 103'₁, 103'₂) of the respective main channels (C1, C2; C1', C2') are configured to deliver respective second electrical signals mainly originating from the radiation from the optical emitters (102₁, 102₂; 102'₁, 102'₂) of the respective main channels (C1, C2; C1', C2').

7. The slip ring for optical fibres as claimed in any one of claims 5 to 6, wherein the various main channels are intended to convert optical signals carried by distinct optical fibres and to generate other optical signals carried by other distinct optical fibres.

8. The slip ring for optical fibres as claimed in any one of claims 5 to 7, wherein each main channel comprises a single optical emitter and a single optical detector.

9. The slip ring for optical fibres as claimed in any one of claims 4 to 8, comprising at least one main channel and one redundant channel connected to the main channel and a selector allowing the selection of a channel from among the main channel and the redundant channel to ensure the transmission of data from the first part to the second part, or vice versa, only by means of the selected channel.

10. The slip ring for optical fibres as claimed in any one of the preceding claims, wherein the slip ring comprises a plurality of optical emitters (102'₁, 102'₂) and a plurality of optical detectors (103'₁, 103'₂) distributed over the first part (110') and the second part (120') so as to allow two-way communication of data between the first part (110') and the second part (120').

11. The slip ring for optical fibres as claimed in any one of the preceding claims, comprising at least one data transmission channel (C1, C2), wherein an optical emitter (102₁, 102₂) is arranged so as to emit a light beam (F1, F2) intercepting a light sensitive zone (Z1, Z2) of at least one optical detector (103₁, 103₂) of said data transmission channel (C1, C2), irrespective of the relative position between the first part (110) and the second part (120) about the axis of rotation (x) taken from among the possible relative positions between the first part and the second part about the axis of rotation (x).

12. The slip ring for optical fibres as claimed in any one of claims 1 to 3, wherein the slip ring for optical fibres comprises a single optical emitter (E) and a single optical detector (D), the optical emitter (E) being arranged to emit a light beam directed substantially parallel to the axis of rotation (x) and the optical detector (D) comprising a light sensitive surface crossing the axis of rotation (x).

13. The slip ring for optical fibres as claimed in any one of the preceding claims, wherein the first part is able to rotate relative to the second part about an axis of rotation (x) and wherein at least one data transmission channel comprises an optical emitter arranged so as to emit a light beam intercepting a light sensitive surface of the detector of said data transmission channel only for a sub-part of the possible relative positions between the first part and the second part about the axis of rotation.

14. The slip ring for optical fibres as claimed in the preceding claim, comprising a computer configured to compute a rotation speed of the first part relative to the second part as a function of the opening of the light beam emitted by the emitter of the channel, of the relative position of the emitter and of the detector along the axis of rotation, of their respective orientations, of the duration of illumination of the detector by the emitter and of the duration between two successive illuminations of the detector by the emitter.

15. The slip ring for optical fibres as claimed in the preceding claim, wherein the transformer (30) comprises a magnetic circuit (41, 42, 43), on which the first winding (31) and the second winding (32) are mounted, the magnetic circuit (41, 42) comprising a gap (43), in which the third winding (33) and the fourth winding (34) are disposed.

16. The slip ring for optical fibres as claimed in the preceding claim, wherein the second part can move relative to the first part about an axis of rotation (x), the third winding being produced in a plane substantially perpendicular to the axis of rotation and the fourth winding being produced in another plane substantially perpendicular to the axis of rotation.

17. A measuring assembly comprising a sensor and a slip ring for optical fibres as claimed in any one of the preceding claims, comprising at least one data transmission channel, the optical fibre, with the signal carried by the optical fibre being generated from a measurement originating from the sensor, said sensor being electrically powered by means of electrical energy delivered by the transformer.

18. The assembly comprising a slip ring for optical fibres as claimed in any one of claims 1 to 16, said assembly comprising the optical fibre and the other optical fibre.

19. The assembly comprising a slip ring for optical fibres as claimed in claim 7, comprising the optical fibres and the other optical fibres.
